# EUROPEAN PATENT SPECIFICATION

(11) **EP 0 678 767 B1**
(45) Date of publication and mention of the grant of the patent: **07.01.1999**
(21) Application number: 95109140.4
(22) Date of filing: 17.06.1991
(51) Int. Cl.: G03B 19/04, G03D 13/00

(54) **Lens-fitted photographic film package**
Filmpackung mit Aufnahmeobjektiv
Emballage de film photographique muni d'un objectif

(30) Priority: 18.06.1990 JP 159341/90; 09.07.1990 JP 180992/90; 13.07.1990 JP 75110/90; 30.07.1990 JP 81074/90
(43) Date of publication of application: 25.10.1995
(62) Divisional of application: 91109913.3
(73) Proprietor: FUJI PHOTO FILM CO., LTD., Kanagawa-ken (JP)
(72) Inventor: Nakai, Norihiko ,c/o Fuji Photo Film Co.Ltd., Kanagawa (JP); Mochizuki, Tatsuya,c/o Fuji Photo Film Co.Ltd., Kanagawa (JP); Sugimoto, Takashi,c/o Fuji Photo Film Co.Ltd., Kanagawa (JP); Ogura, Toshiyuki,c/o Fuji Photo Film Co.Ltd., Kanagawa (JP)
(74) Representative: Grünecker, Kinkeldey, Stockmair & Schwanhäusser Anwaltssozietät

(56) References cited:
- EP-A- 0 242 817
- DE-A- 3 735 116
- GB-A- 2 210 699
- PATENT ABSTRACTS OF JAPAN vol. 012 no. 175 (P-707) ,25 May 1988 & JP-A-62 286051 (FUJI PHOTO FILM CO LTD) 11 December 1987,

## Description

The present invention relates to a lens-fitted photographic film package having a film supply chamber for holding an unexposed film strip, and a film take-up chamber for winding up said film strip therein after exposure, said lens-fitted photographic film package comprising: a film, a take-up spool disposed in said film take-up chamber and winding up said exposed film strip when being rotated in a first direction; a film advancing wheel for rotating said take-up spool; a reversion preventing claw engaging with said film advancing wheel thereby to prevent said take-up spool from rotating in a second direction; a pair of flanges fitted to said take-up spool for regulating positions of both edges of said exposed film strip.

Lens-fitted photographic film package of this type (hereinafter called simply film package), in which a photographic film is previously loaded and simply exposure mechanisms are incorporated, are widely known, which are intended to make it possible to take pictures whenever desired without buying or carrying about a camera. For example, Japanese Unexamined Patent Publication No. 64-544 discloses a film package which is previously loaded with a 135-type cassette film (ISO: 1007-1979) in light-tight fashion. Another film package of this type is known from DE-A1-3735116.

In this type of film package, the film is wound into a film cassette one frame after each exposure, so that the entire length of film has been taken up in the film cassette when all the available frames have been exposed. Thereinafter, the film package itself is forwarded to a photofinisher. In order to take out the film cassette containing the exposed film, the photofinisher disassembles or partially breaks the film package, or detach a light-shielding cover at the bottom of a film take-up chamber, in either case, in the light. The film cassette is then subjected to a conventional photofinishing and printing process, and the photofinisher gives the developed negative film and resulting photographic prints back to the customer.

However, it is inefficient to take out a film cassette from the film package and subsequently pulling out the exposed film from the film cassette. Furthermore, because the exposed film is completely wound into the film cassette in the film package, it is necessary to disassemble the film cassette or to use a device for catching the leader portion of the film so as to pull out the exposed film from the cassette. Therefore, pulling out the exposed film from the cassette itself is rather cumbersome.

In view of the foregoing, a main object of the present invention is to provide a film package in which an exposed film can be directly pulled out from a package housing as to facilitate the removal of the exposed film strip and which has a material saving structure.

The above object is achieved by a lens-fitted photographic film package according to claim 1.

Prevention of the film end from being wound onto a film cassette will make it needless to pull out the film end from film a cassette, so that the new package can be handled easily by the photofinisher by pulling out the film from the film package directly. Moreover, by the inventive structure the cost, recovery and recycling of lens fitted film packages is improved.

Generally, the photofinisher is required to process also the photographic films contained in their film cassette taken out from conventional cameras. Because it is necessary to take out the film cassette from the film package, the film packages are sorted out and dealt with separately from the conventional film cassettes.

The above object and other advantages of the invention will become apparent from the following description of preferred embodiments when read in conjunction with the accompanying drawings, wherein like reference characters designate like or corresponding parts throughout the several view, and:
Figure 1 is a front perspective view of a film package with its film housing encased in the outer casing;
Figure 2 is a rear perspective view of the film package shown in Fig. 1;
Figure 3 is a perspective view showing the relationship between the spool and the film end;
Figure 4 is an exploded perspective view of a film housing wherein a take-up spool is disposed in the film take-up chamber;
Figure 5 is a horizontal section of the film housing of Figure 4;
Figure 6 is a perspective view of the film package wherein the film end is fed out from the film housing shown in Figure 4;
Figure 7 is a perspective view of a film package not part of the invention containing a cassette from which the film can be fed out by rotating the spool;
Figure 8 schematically shows the processing of a film package in a film processor provided with a package holder;

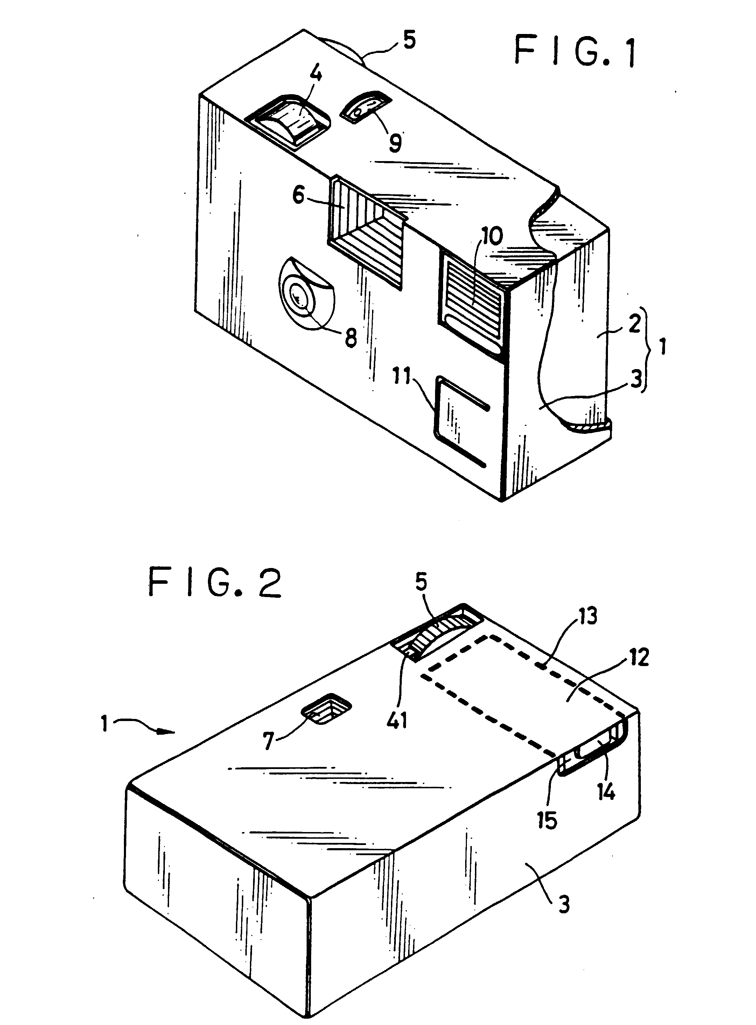

In Fig. 1 a film package 1 comprises a film housing 2 having exposure mechanism and an outer casing 3 in which the film housing is encased. The outer casing 3, which is intended to decorate the appearance of the film package 1, is a cardboard box or the like having ornamental patterns and information printed thereon. The outer casing 3 is formed with openings for exposing a shutter release button 4, a film advancing wheel 5, a finder window 6, a lock-in window 7 (see Fig. 2), a taking lens 8, a film frame counter 9 and a flash light window 10, so that the user can operate the film package 1 without removing the outer casing 3. The outer casing 3 further has a slit 11 for facilitating depression of a flash charge switch (not-shown).

As shown in Fig. 2, a part 12 of the rear side of the outer casing 3 is torn off so as to take out an exposed film directly from the housing 2. A perforation line 13 and a cut-out 15 for making a tab 14 are provided to help to tear off the part 12. The perforation line 13 and the cut--out 15 are not necessary if the outer casing 3 is removed from the housing 2 for taking out the exposed film. It is possible to eliminate the outer casing 3 as having no bearing on photography, or to stick a decorative printed paper to a part of the outer surface of the housing 2.

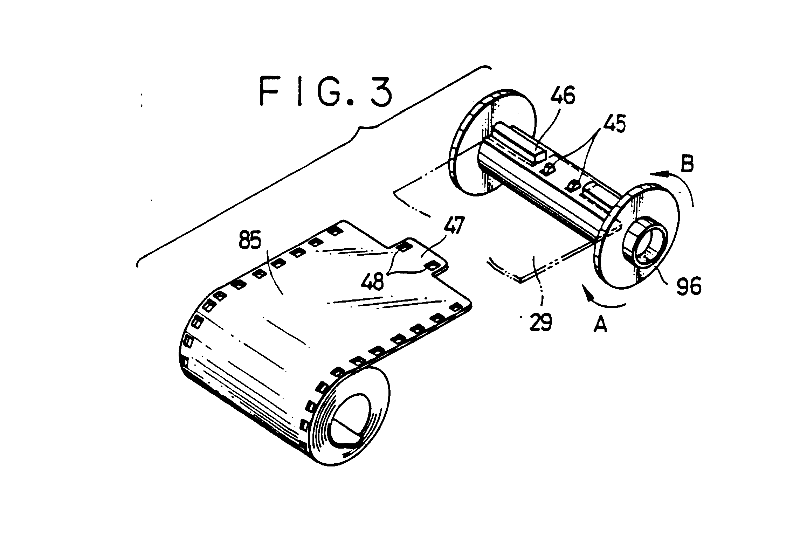

A spool 96 is rotatably mounted in the film take up chamber and has a pair of claws 45 and a pair of ridges 46 formed on a flat cut-out surface of the spool 96, as shown in Fig. 3. The top surface of the ridges 46 is extended in the same plane as the peripheral surface of the spool 96. On the other hand, the height of the claws 45 is equal or less than that of the ridges 46. On the trailing end of the film 85, there is formed a lug 47 with two holes 48, which is put on the flat cut-out surface between the two ridges 46 with its holes 48 caught on the claws 45.

So as to wind up the exposed film 85 into the film take up chamber, the spool 96 is rotated in a direction A in which the engagement between the claws 45 and the holes 48 is maintained, so that the film 85 will be tightly wound on the spool 96. When the film 85 is pulled out the spool 96 is rotated by the movement of the film 85 in the reversed direction B. Since the holes 48 is disengaged form the claws 45 when the spool 96 rotates in the direction B, the film 85 will be separated from the spool 96 at the end without the need for cutting the film 85.

On photographing, the film package 2 is operated without removing the outer casing 3. Upon depression of the shutter release button 4, the shutter is actuated to let the exposure light passing through the taking lens 8 incident upon the film 85 disposed behind the exposure opening 81a. When the film advancing wheel 5 is rotated after the exposure, the spool 96 is rotated in the A direction through a fork, so that the exposed portion of the film 85 is wound up while an unexposed portion is set behind the exposure opening 81a. While the film 85 is advanced by one frame, a sprocket 112 engaging with perforations 85 of the film 85 is rotated by the movement of the film 85, thereby setting the shutter in the cocked position and, at the same time, rotating the film frame counter 9 by one graduation. When the film 85 has been advanced by one frame, a lock mechanism is actuated to prevent the rotation of the film advancing wheel 5.

When the film advancing wheel 5 is rotated after the exposure of the last frame, the leading end of the film 85 is slipped out from the sprocket 112, so that the sprocket 112 will not be rotated since then. Therefore, the lock mechanism is not actuated, and the shutter is not charged. As a result, the shutter would not be actuated even when the shutter release button 4 is depressed.

When all the available film frames have been exposed, the film package 1 is forwarded to a photofinisher for developing and printing. In the photofinishing laboratory, a reversion preventing claw 111 is broken or bent using an appropriate tool, so as to enable the film advancing wheel 5 to rotate reversal. Then, the tab 14 is pulled as to tear off the part 12 of the outer casing 3 along the perforation line 13. A lid is torn off from the rear cover along a groove whereby a film take-out opening is formed. The exposed film can be pulled out perpendicular to the back wall of the film package. It is preferable to extend the lid up to the claw 111 such that the claw 111 is torn off from the rear cover together with the lid.

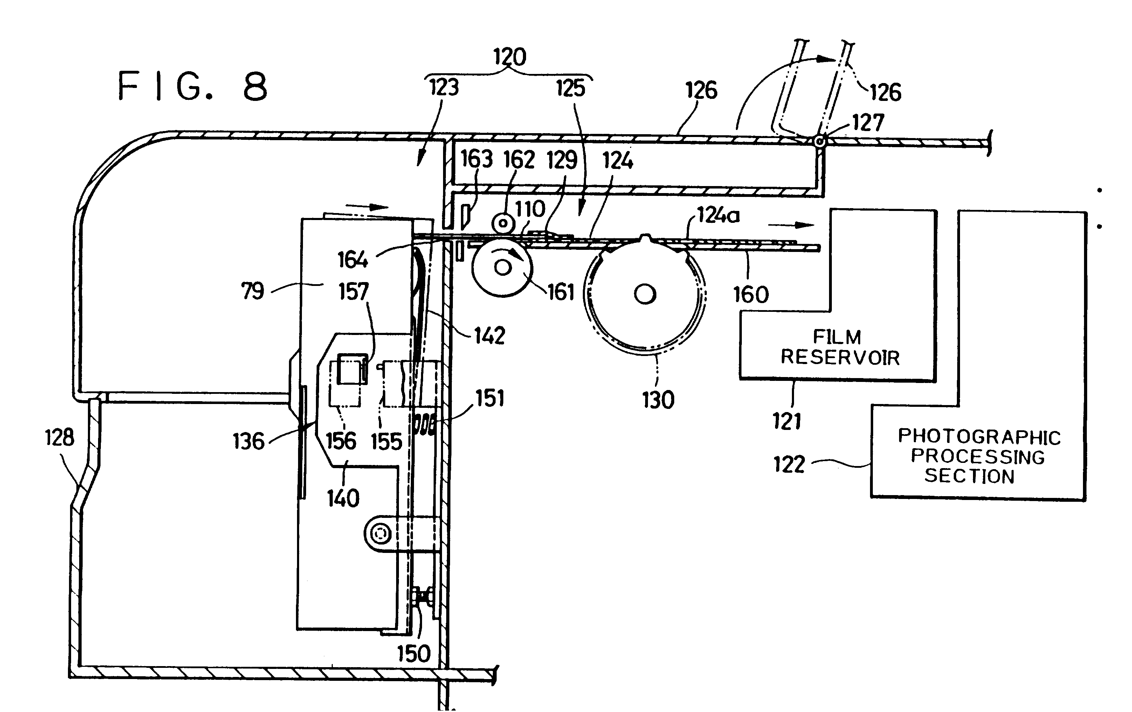

The leading end of the film strip is a little pulled out so as to set it in a film processor as shown in Fig. 8. In the film processor, a leader sheet is coupled to the leading end and is fed into a processing section, so that the exposed film 85 is pulled out while the spool 96 and the film advancing wheel 5 are rotated in the reversed direction. Because, at the end, the holes 48 formed in the lug 47 of the trailing end of the film 85 are easily disengaged from the claws 45, the entire length of the exposed film 85 is pulled out and fed into the processor section. The exposed film 85 is subjected to printing after development.

For the purpose of environmental protection and recycling of industrial resources, the film package 1 in this condition is returned to the factory of the film package maker. In the factory, the outer casing 3 is detached form the main body to remove the battery. A rear cover is removed from the main body 2. Thereafter, it is checked whether the exposure mechanisms incorporated in the main body such as the shutter the film advancing mechanism, the taking lens 8, can operate normally. If no defection is determined, the main body is recycled as itself.

For recycling, the main body is, after resetting the film frame counter 9 to its initial position, fed on an automatic assembling line together with new main bodies. On the automatic assembling line, the main body is loaded with a new film, and is mounted with a new rear cover. Finally, the main body is encased in a new outer casing, and thus a new film package is produced. The rear cover detached from the main body is melted and is used as material for forming a rear cover or the like by molding. The battery 43 is thrown away.

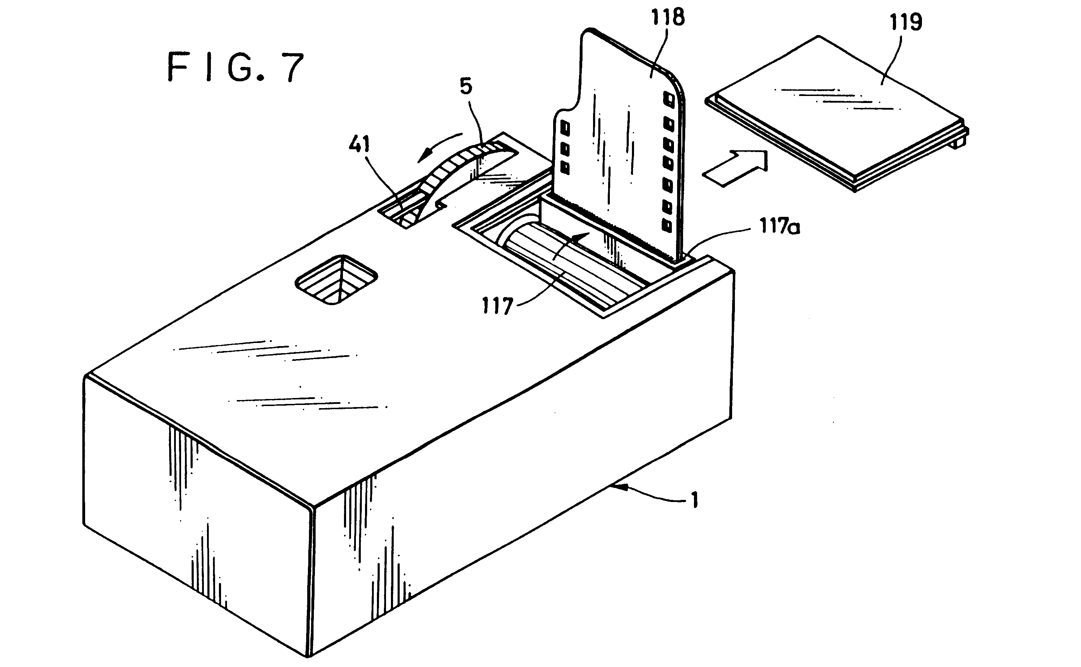

Fig. 7 shows a film package not part of the invention using a film cassette from which the leader portion of the film contained therein can be fed out by rotating the spool of the cassette. In such a film cassette 117, as disclosed in Japanese Unexamined Patent Publication No. 02-124564, an exposed film 118 is wound tightly on a spool (not shown), and the film roll is clamped at its both ends by a pair of flanges formed on both ends of the spool, or the outermost periphery of the film roll is pressed inwardly by a rib formed around on the inner surface of the film cassette.

In this case, when taking out the exposed film, a lid 119 is slid off to open a film take-out opening after a part of the outer casing is torn off. Then, the film cassette 117 is rotated in a direction shown by an arrow, thereby to turn the position of a mouth 117a by 90 degrees. When the film advancing wheel 5 is rotated in a direction shown by an arrow after removal of the reversion preventing claw 41, the spool of the cassette 117 is rotated. Along with the rotation of the spool, the film roll rotates without being unwound, so that the film leader portion 118, which is separated by a separating claw (not-shown) from the second outermost turn of the film roll, is fed out from the cassette 117 through the mouth 117a. After the film leader portion 118 is fed out in this way, the cassette 117 containing the exposed film is set in a film processor for development. After the film is completely taken out, the film package with the empty cassette is sent to a factory of the film package maker.

Although the lids according to the above embodiments are tear-off type or removable, it is possible to form a lid integrally with the rear cover such that the lid is connected at one margin to the rear cover through a thin wall portion, and thus pivotally openable. It may also be possible to use a light-tight sheet covering the film take-out opening. The light-tight sheet is peeled or torn from the rear cover for taking out the exposed film. The film take-out opening may be disposed on one side of the film housing. In this case, the cassette is rotated by about 180 degrees so as to direct the mouth of the cassette toward the film take-out opening, thereby to pull out the exposed film sidewise from the film housing.

Conventional film package contains a cassette into which the exposed film is wound up, so that the exposed film can be removed from the film package even in the light, and that the film exposed by the film package can be processed in a conventional photofinishing system for the most popular 135-type film. However, in case the exposed film is directly pulled out from the film package, it is preferable to eliminate the cassette from a standpoint of cost, recovery and recycle of the film package. That is, because the user can hardly take out the naked exposed film from the film package, almost all film packages would be forwarded to photofinisher without being disassembled or damaged.

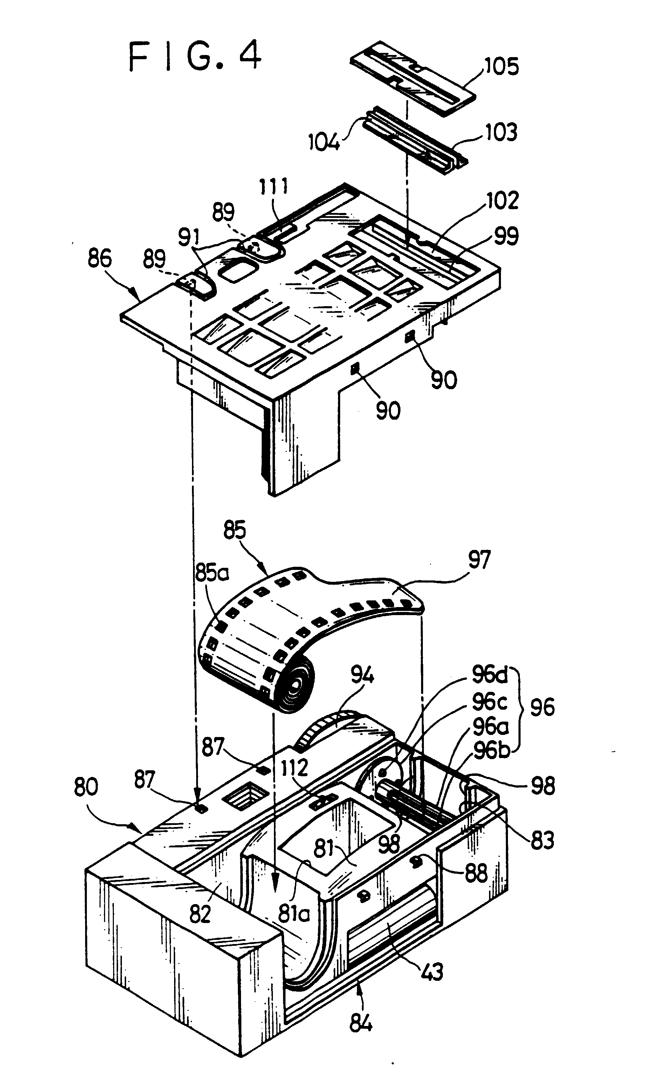

Figs 4 to 6 show a film package 79 wherein an exposed film is wound up on a take-up spool 96 in place of a film cassette. A main body 80 has an exposure frame 81, and a film supply chamber 82 and a film take-up chamber 82 on both sides of the exposure frame 81. The film supply chamber 82 receives an unexposed film 85 rolled about an empty, and the exposed film is wound up into the film take-up chamber 83. A front cover 84 is attached to the front of the main body 80. A rear cover 86 is removably attached to the rear of the main body 80 after the unexposed film 85 is loaded in the main body 80, so as to close the rear side of the main body 80 as well as the bottom of the film supply chamber 82 in light-tight fashion. The unexposed film 85 may be wound on an axle and set in the film supply chamber 82 in this condition. In this case, the axle should have such a construction that the trailing end of the film will be easily disengaged from the axle.

In order to attach the rear cover 86 removably to the main body 80, the main body 80 is formed with a pair of engaging holes 87 and a pair of engaging claws 88, while the rear cover 86 is formed with a pair of engaging claws 89 and a pair of engaging holes 90. Surround each engaging claw 89, a groove 91 is formed to provide a thin wall portion in the rear cover 86, so that the rear cover 86 is torn off along the grooves 91 for the removal from the main body 80. The grooves 91 may be omitted if the engaging claws and holes 89 and 87 can be easily disengaged from each other.

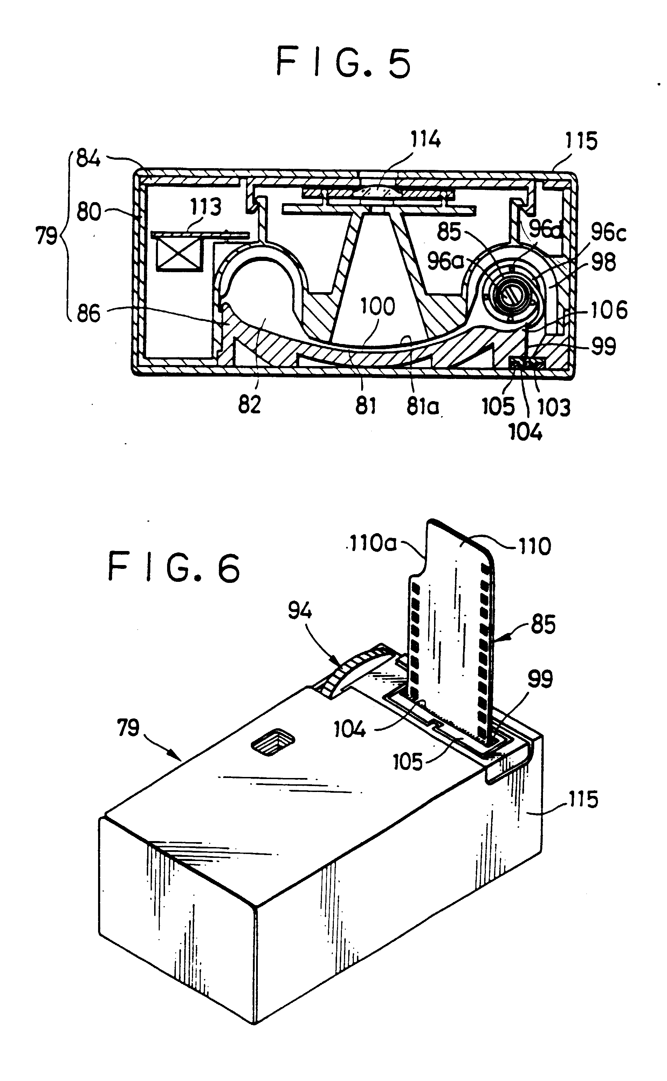

As shown in Fig. 5, there is formed on the inner surface of the rear cover 86 a film guide surface 100 which is curved complementarily to the exposure frame 81 of the main body 80. Therefore, when the rear cover 86 is attached to the main body 80 after the film loading, the film guide surface 100 gently presses the film 85 from the rear against the rear end surface of the exposure frame 81, so that the film 85 disposed behind an exposure opening 81a would not be loose or rippled.

The take-up spool 96, which is disposed in the film take-up chamber 83 and is rotatable by a film advancing wheel 94, comprises an axle 96a on which the film 85 is wound, a slit 96b into which the film leader portion 97 having smaller width than the other film strip is inserted, and a pair of flanges 96c for positioning both edges of the film 85. On the periphery of each flange 96c, there are a plurality of round bosses 96d protruding inwardly and surrounding the film roll 85 wound on the axle 96a. Since the bosses are disposed around a circle whose diameter is slightly larger than that of the film roll 85 being fully wound up on the axle 96a, the bosses 96d gently press the upper and lower edges of the outermost turn of the fully wound film roll 85, thereby to prevent unwinding of the film roll 85. Furthermore, the film take-up chamber 83 is formed on its inner wall surface with upper and lower ribs 98 which extend correspondingly to perforations 85a of the film 85 wound on the axle 96a. The ribs 98 guide the trailing end 110 of the film 85, that is, the end of the outermost turn of the film roll 85 wound on the axle 96a, toward a film take-out slit 99 when the film 85 is fed out from the film package 79.

The film take-out slit 99 is disposed on the rear side of the film 85 wound on the take-up spool 96. Recessed surface 102 on both sides of the film take-out slit 99 holds a pair of light-trapping fabrics 103 and 104 and a plate 105 for pressing the light-trapping fabrics 103 and 104 onto the recessed surface 102. The light-trapping fabrics 103 and 104, which are made of plushes, prevent ambient light from entering the film take-up chamber 83 through the slit 99. The light-trapping effect of the plushes 103 and 104 is achieved by the pile of thread, and the film 85 thrusts the pile thread aside when passing through the slit 99.

As shown in Fig. 5, a separating claw 106 is formed integrally with one of the walls forming the film take-out slit 99, and protrudes inward the film take-up chamber 83 such that the film trailing end 110 is caught by the separating claw 106, and is thus directed toward the slit 99. The trailing end 110 of the film 85 has a cut-out 110a so that the trailing end 110 may not be pressed by the round bosses 96d of the take-up spool 96 when the film 85 is fed out. Designated by 111, 112, 113, 114 and 115 are a reversion preventing claw, a sprocket, a circuit board for a flash unit, a lens and an outer casing, respectively.

The operation of the embodiment shown in Figs. 4 to 6 will be briefly described.

When the film advancing wheel 94 is rotated, the exposed film 85 is wound up on the axle 96a of the take-up spool 96. During being wound, both edges of the film 85 is guided inwards the round bosses 96d of the flange 96c, whereby the outermost turn of the film 85 wound on the take-up spool 96 is always inside the circle on which the bosses 96d are disposed.

After the exposure of all the available frames, the film package 79 is forwarded to a photofinisher, wherein the film advancing wheel 94 is rotated so as to confirm that the exposed film 85 has been completely wound up on the take-up spool 96, prior to taking out the film. This can be judged depending on the torque required to rotate the film advancing wheel 94, as well as on the noise generated when the film trailing end 110 removes from the separating claw 106 and contacts against the rib 98.

Next, a part of the outer casing 115 is torn off along a perforation line thereby to expose the pressing plate 105 and the slit 99. The reversion preventing claw 11 is broken away, and the film advancing wheel 94 is rotated in the reversed direction, whereby the exposed film 85 wound on the axle 96a rotates along with the take-up spool 96 without being unwound, because the round bosses 96b of the flange 96c press the outermost turn of the film 85.

But the film trailing end 110, as having the cut-out 110a, is not regulated by the bosses 96d, and thus protrudes outwards from the flange 96c. Therefore, the curled trailing end 110 moves along the rib 98, and is caught by the separating claw 106, thereby being guided toward the film take-out slit 99. Then, the trailing end 110 passes through the slit 99 while thrusting its way throuch the pile threads of the plushes 103 and 104, and then fed out from the film package 79. After feeding out the film end portion, the film package 79 is set in a film processor, and the exposed film 86 is fully pulled out for photofinishing, in the same way as for the above embodiments.

After the removal of the exposed film 85, the film package 79 is recovered by the film package maker. As described above, the outer casing 115 and then the battery 43 for flash are removed. Thereafter, the rear cover 86 is pried open by a tool such as a screw driver pushed into a gap between the engacing claw 68 and the engaging hole 90, whereby the rear cover 86 is broken along the grooves 91. In this way, the rear cover 86 is easily removed from the main body 80. The fractions surrounded by the grooves 91, as having the engaging claws 89, are finally disengaged and removed from the main body 80. The main body 80 attached with the front cover 84 is recycled as itself, in the same way as described above. The rear cover 86 is melt after removal of the plushes 103 and 104.

The film take-out slit 99 may be disposed on one side of the main body 80. It is possible to expose the bottom end of the take-up spool 96 from the main body 80 so as to rotate the take-up spool 96 directly by rotating the bottom end. Instead of the plushes 103 and 104, the film take-out slit 99 may have a labyrinth construction, or may be closed by a operable lid. In order to prevent unwinding of the film roll 85 on the take-up spool 96, it is possible to clamp the film roll by the flanges, or to design the ribs 98 as to contact the outermost turn of the film roll 85. It is also possible to provide a resilient sheet for pressing the outermost turn of the film roll 85.

The above described film packages can be developed in a film processor as shown in Fig. 8, wherein, for instance, the film package 79 shown in Figs. 4 and 6 is set in this film processor. The film processor comprises a film supply section 120, a film reservoir 121 and a photographic processing section 122. The film supply section 120 consists of a package receiving division 123 in which the film package 79 is set, a leader sheet setting division 125 for setting a leader sheet, and a light-tight cover 126 for shielding these divisions 123 and 125 from ambient light. The light-tight cover 126 is openably mounted on the film processor housing 128 through a hinge, and thus pivots about the hinge 127.

The package receiving division 123 has a package holder 136 capable of holding both the film package 79 containing the exposed film and a film cassette 135 containing the exposed film. The end portion of the exposed films pulled out from the film package 79 and the cassette 135 are spliced to the leader sheet 124 by a splicing tape 129. In this condition, the film package 79 and the cassette 135 are set on the package holder 136. The leader sheet 124 has perforations 124a extending lengthwise in the center of the leader sheet 124. Since the perforations 124a engage with teeth of a sprocket 130, the leader sheet 124 is transported to the film reservoir 121. In place of the sprocket 130, it is possible to use an endless belt having a line of teeth.

The end of a film 137 contained in the film cassette 135 is hooked and pulled out by means of a film catching device which is inserted through the mouth 135a of the cassette 135, as is known in the art. On the other hand, the trailing end 110 of the film 85 contained in the film package 79 is fed out by rotating the film advancing wheel 94 in the reversed direction after breaking out the reversion preventing claw 111, as is described so far.

When the film processor processes the film package 79 and the film cassette 135 simultaneously, at first the film ends are fed out or pulled out from the film package 79 and the film cassette 135 in the above described manner. Then, the film ends are spliced to the leader sheet 124 by the splice tapes 129.

The light-tight cover 126 is opened as shown by chain-dotted line in Fig. 18, thereby to set the leader sheet 124 on the sheet set plate 160 such that the perforations 124a of the leader sheet 124 engage with the teeth of the sprocket 130. Next, the film package 79 is inserted between the holding plate pair 140, whereas the film cassette 135 is hooked on the cassette supporter 142. Then, the light-tight cover 126 is closed.

Upon actuation of a start button, the sprocket 130 and the film feed roller 161 start rotating, thereby transporting the leader sheet 124 toward the film reservoir 121. As the result, the exposed films 85 and 137 are drawn out from the film package 79 and the film cassette 135 respectively through the film take-out slit 99 and the mouth 135a. The films 85 and 137 are each temporary reserved by a constant length as a loop in the film reservoir 121 and, thereafter, is fed with the leader sheet 124 in the lead into the photographic processing section 122.

While being drawn out, the film 85 is automatically removed from the film package 79 because the leading end 97 of the film 85 slips out from the take-up spool 96, so that the entire length of the film 85 is supplied to the photographic processing section 122. On the other hand, because the film 137 is secured to the spool of the cassette 135, the cassette 135 is tugged toward the photographic processing section 122 when the substantially entire length of film 137 has been drawn out from the cassette 135. As the result, the holder 136 holding the cassette 135 rotates about the pin 149 against the spring 151, as shown by chain-dotted line in Fig. 8, whereby the film end detector 155 on the side of the cassette 135 is switched on. Upon the film end detector 155 being switched on, the sprocket 130 and the film feed roller 161 stop rotating. Then, the cutter 163 associated to the holder 136 holding the cassette 135 is actuated to cut the film 137. Thereafter, the sprocket 130 and the film feed roller 161 again start rotating.

It will be understood that if the film package contains the same film cassette as the film cassette 135, the holder 136 holding that film package also rotates at the end of film drawing process in the same way as for the film cassette 135, so that the film end detector 155 is switched on thereby actuating the cutter 163 to cut the film.

Upon cutting the film 137, the empty cassette 135 falls down, and the holder 136 returns to the initial position under force of the coil spring 151. When the initial position detector 156 detects that the holder 136 returns to the initial position, an indication that the film drawing process is completed is given to the operator by a buzzer or a display.

When the film drawing processes are completed, the operator opens the light-tight cover 126, takes out the empty film package 79 and the empty cassette 135, and sets a new film package and a film cassette. Needless to say, it is possible to set two film packages or two film cassettes in the package receiving division 123. It is to be noted that the sprocket 130 and the film feed roller 161 stop rotating when the light-tight cover 126 is opened.

The exposed films 85 and 137 supplied to the photographic processing section 122 are subjected to photographic processing while passing sequentially through various processing bathes. Thereafter, the films 85 and 137 are dried in a drier, and then hanged at its leader sheet vertically in a well-known film stock apparatus.

## Claims

1. Lens-fitted photographic film package comprising :
a film supply chamber (82) for holding an unexposed film strip (85);
a film take-up chamber (83) for winding up said film strip therein after exposure;
a film strip (85);
a take-up spool (96) disposed in said film take-up chamber (83) for winding up the exposed film strip (85) when being rotated in a first direction;
a film advancing wheel (94) for rotating said take-up spool (96);
a reversion preventing claw (111) engaging with said film advancing wheel (94) thereby to prevent said take-up spool (96) from rotating in a second direction opposed to said first direction;
a pair of flanges (96c) fitted to said take-up spool (96) for regulating positions of both edges of said exposed film strip;
**characterized in that**
a plurality of projections (96d) are formed on one side of said flanges (96c) that contact said film edge, said projections (96d) being disposed so as to contact against an outermost turn of the roll of said exposed film strip when it is fully wound on said take-up spool (96), thereby preventing unwinding of said film roll beyond said projections (96d) except the trailing end (110) of the exposed film strip (85); and
a film take-out opening (99) in said film take-up chamber (83) formed and positioned so that when said take-up spool (96) is rotated in said second direction after said reversion preventing claw (111) is disengaged from said film advancing wheel (94) said trailing end (110) of said exposed film strip wound on said take-up spool (96) engages said take-out opening (99) and the trailing end is fed out from the lens-fitted photographic film package though said film take-out opening (99).

2. Lens-fitted photographic film package according to claim 1, **characterised in that,** said film take-out opening (99) is mounted with light-trapping means for shielding the interior of said film take-up chamber from ambient light.

3. Lens-fitted photographic film package to claim 1 or 2 **characterised in that**, said light-trapping means include a pair of L-shaped plushes (103, 104) having pile threads.

## Patentansprüche

1. Filmpackung mit Aufnahmeobjektiv, umfassend:
eine Filmvorratskammer (82) zum Halten eines unbelichteten Filmstreifens (85);
eine Filmaufnahmekammer (83) zum Aufwickeln des Filmstreifens in dieser nach erfolgter Belichtung;
einen Filmstreifen (85);
eine Aufnahmespule (96), die in der Filmaufnahmekammer (83) angeordnet ist, zum Aufwickeln des belichteten Filmstreifens (85) bei Drehung in einer ersten Richtung;
ein Filmtransportrad (94) zum Drehen der Aufnahmespule (96);
eine Rückdrehsicherungsklaue (111), die mit dem Filmtransportrad (94) in Eingriff steht, um ein Drehen der Aufnahmespule (96) in eine zweite Richtung zu verhindern, die entgegengesetzt der ersten Richtung ist;
ein Paar Flansche (96c), die an der Aufnahmespule (96) angebracht sind, zur Einstellung der Lage der beiden Kanten des belichteten Filmstreifens;
**dadurch gekennzeichnet**, daß
eine Vielzahl von Vorsprüngen (96d) an einer Seite der Flansche (96c) vorgesehen sind, die der Anlage der Filmkante dient, wobei die Vorsprünge (96d) derart angeordnet sind, um gegen eine am weitesten außenliegende Windung der Rolle des belichteten Filmstreifens anzuliegen, wenn dieser voll auf die Aufnahmespule (96) gewickelt ist, wodurch ein Abwickeln der Filmrolle über die Vorsprünge (96d) hinaus verhindert wird, mit Ausnahme des hinteren Endes (110) des belichteten Filmstreifens (85); und
eine Filmentnahmeöffnung (99) in der Filmaufnahmekammer (83) ausgebildet und angeordnet ist, derart, daß bei einem Drehen der Aufnahmespule (96) in die zweite Richtung nach einem Außereingriffbringen der Rückdrehsicherungsklaue (111) mit dem Filmtransportrad (94) das hintere Ende (110) des belichteten Filmstreifens, der auf die Aufnahmespule (96) aufgewickelt ist, mit der Entnahmeöffnung (99) in Eingriff kommt und das hintere Ende von der Filmpackung mit Aufnahmeobjektiv durch die Filmentnahmeöffnung (99) herausgefördert wird.

2. Filmpackung mit Aufnahmeobjektiv nach Anspruch 1, **dadurch gekennzeichnet**, daß die Filmentnahmeöffnung (99) mit lichtdichten Mitteln zur Abschirmung des Inneren der Filmaufnahmekammer gegen Streulicht versehen ist.

3. Filmpackung mit Aufnahmeobjektiv nach Anspruch 1 oder 2, **dadurch gekennzeichnet**, daß die lichtdichten Mittel ein Paar L-förmiger Plüschelemente (103, 104) mit Florfäden aufweisen.

## Revendications

1. Emballage de film photographique équipé de lentilles, comprenant :
une chambre d'alimentation de film (82) pour tenir un ruban de film non exposé (85);
une chambre de réception de film (83) pour enrouler ledit ruban de film après exposition ;
un ruban de film (85);
une bobine de réception (96) disposée dans ladite chambre de réception de film (83) pour enrouler le ruban de film exposé (85) lorsqu'on la fait tourner dans une première direction ;
une roulette d'avance de film (94) pour faire tourner ladite bobine de réception (96);
une griffe d'empêchement d'inversion (111) en engagement avec ladite roulette d'avance de film (94) pour empêcher grâce à ceci à ladite bobine de réception (96) de tourner dans une seconde direction opposée à ladite première direction,
une paire de flasques (96c) montés sur ladite bobine de réception (96) afin de réguler les positions des deux bordures dudit ruban de film exposé ;
caractérisé en ce que
une pluralité de projections (96d) sont formées sur un côté desdits flasques (96c) qui est en contact avec ladite bordure du film, lesdites projections (96d) étant disposées de manière à venir en contact contre une spire la plus extérieure dudit rouleau de ruban de film exposé lorsqu'il est entièrement enroulé sur ladite bobine de réception (96), en empêchant grâce à ceci le déroulement dudit rouleau de film au-delà desdites projections (96d) à l'exception de l'extrémité de queue (110) du ruban de film exposé (85) ; et
une ouverture d'enlèvement de film (99) dans ladite chambre de réception de film (83), formée et positionnée de telle façon que lorsque ladite bobine de réception (96) est tournée dans ladite seconde direction après avoir dégagé ladite griffe d'empêchement d'inversion (111) depuis ladite roulette d'avance de film (94), ladite extrémité de queue (110) dudit ruban de film exposé enroulé sur ladite bobine de réception (96) engage ladite ouverture d'enlèvement (99) et l'extrémité de queue est avancée hors dudit emballage de film photographique équipé de lentilles à travers ladite ouverture d'enlèvement de film (99).

2. Emballage de film photographique équipé de lentilles, selon la revendication 1, caractérisé en ce que ladite ouverture d'enlèvement de film (99) est équipée de moyens de blocage de lumière afin de protéger l'intérieur de ladite chambre de réception de film vis-à-vis de la lumière ambiante.

3. Emballage de film photographique équipé de lentilles, selon l'une ou l'autre des revendications 1 et 2, caractérisé en ce que lesdits moyens de blocage de lumière incluent une paire d'éléments en peluche en forme de L (103, 104) comportant des fils disposés en brosse.
